Europäisches Patentamt

European Patent Office

Office européen des brevets

(11) Veröffentlichungsnummer : **0 215 770**
**B1**

(12) **EUROPÄISCHE PATENTSCHRIFT**

(45) Veröffentlichungstag der Patentschrift :
15.06.88

(51) Int. Cl.⁴ : **B 60 K 17/344**

(21) Anmeldenummer : **86890250.3**

(22) Anmeldetag : **08.09.86**

(54) Antriebsanordnung für Kraftfahrzeuge.

(30) Priorität : **11.09.85 AT 2655/85**

(43) Veröffentlichungstag der Anmeldung :
**25.03.87 Patentblatt 87/13**

(45) Bekanntmachung des Hinweises auf die Patenterteilung : **15.06.88 Patentblatt 88/24**

(84) Benannte Vertragsstaaten :
**DE FR GB IT**

(56) Entgegenhaltungen :
**EP-A- 0 014 954**
**AT-B-   378 046**
**DE-A- 3 317 247**
**DE-A- 3 507 491**

(73) Patentinhaber : **Steyr-Daimler-Puch Aktiengesellschaft**
**Kärntnerring 7**
**A-1010 Wien (AT)**

(72) Erfinder : **Lanzer, Heribert, Dipl.-Ing.**
**Hauptstrasse 236**
**A-8071 Gössendorf (AT)**

## Beschreibung

Die Erfindung betrifft eine Antriebsanordnung für Kraftfahrzeuge, deren Hinterachse unmittelbar und deren Vorderachse mittelbar über eine Flüssigkeitsreibungskupplung angetrieben sind.

Eine solche Antriebsanordnung ist beispielsweise aus der AT-B-378 046 bekannt. Dabei übernimmt die Flüssigkeitsreibungskupplung im wesentlichen die Aufgabe eines Verteilergetriebes mit variabler Leistungsverzweigung und zugleich die Aufgabe eines Ausgleichgetriebes mit selbständig veränderlicher Sperrwirkung. Für Personenkraftwagen und leichte Nutzfahrzeuge reicht der Erfüllungsgrad dieser Aufgabe völlig aus. Für Sportfahrzeuge, insbesondere Rallye-Fahrzeuge, gelten jedoch andere Kriterien.

Die Antriebskraftverteilung soll nämlich so sein, daß das Eigenlenkverhalten des Fahrzeuges mehr oder weniger übersteuernd ist. Dies läßt sich mit der Flüssigkeitsreibungskupplung erreichen, welche die Vorderachse antreibt, wogegen die Hinterachse starr mit dem Antrieb verbunden ist. Kürzeste Bremswege, ein ebenso wichtiges Kriterium bei Rallye-Fahrzeugen, werden dagegen erzielt, wenn die beiden Achsen starr miteinander verbunden werden. In einem Antriebsstrang, der eine Flüssigkeitsreibungskupplung enthält, sorgt diese zwar für die Antriebsverbindung der beiden Achsen, jedoch stehen für die Auslegung der Kupplung die Forderungen nach dem gewünschten Antriebs- und Bremsverhalten einander gegensätzlich gegenüber. Für den Antriebsfall sollte die Flüssigkeitsreibungskupplung nämlich in Abhängigkeit von der Differenzdrehzahl eher ein geringeres Drehmoment übertragen, also gewissermaßen weich sein, um das gewünschte Übersteuern zu erreichen, wogegen beim Bremsen bei gleicher Differenzdrehzahl ein hohes übertragbares Drehmoment gefordert werden muß, um die Achsen möglichst starr miteinander zu verbinden und so zu ganz kurzen Bremswegen zu gelangen.

Aufgabe der Erfindung ist es daher, die eingangs geschilderte Antriebsanordnung mit einfachen Mitteln so zu verbessern, daß beide Forderungen erfüllt werden können.

Die Erfindung löst die gestellte Aufgabe dadurch, daß im Antriebsstrang zur Vorderachse parallel zur Flüssigkeitsreibungskupplung eine, z. B. von einem Klemmrollenfreilauf gebildete, Einwegkupplung eingebaut ist, die bei die Drehzahl des zur Hinterachse führenden Antriebsstrangteiles unterschreitender Drehzahl des zur Vorderachse führenden Antriebsstrangteiles gelöst ist.

Bekanntlich überträgt eine Flüssigkeitsreibungskupplung nur dann ein Drehmoment, wenn zwischen An- und Abtrieb eine Drehzahldifferenz vorhanden ist. Diese Differenz ergibt sich aus unterschiedlichen Reifenschlupfwerten an den Achsen, d. h. der Schlupf an der Hinterachse ist größer als an der Vorderachse. Größerer Schlupf bedeutet größere Ausnützung des Straßenreibwertes in Längsrichtung, damit aber auch eine geringere Seitenführung an der Hinterachse, so daß das Fahrzeug übersteuert, wie dies im Rallye-Betrieb gewünscht ist. Nun erlauben die Bremsanlage und die Reifen eines Rallye-Fahrzeuges große Verzögerungen, in deren Folge sehr starke Achslastverschiebungen zur Vorderachse hin auftreten. Die Bremsen der Vorderachse erreichen demnach zuerst ihre Leistungsgrenze. Erfindungsgemäß ist nun, da die Einwegkupplung zur Wirkung kommt und eine starre Verbindung der Achsen herstellt, eine geringere Drehzahl der Hinterachse nicht möglich, und es wird somit durch das nicht vollständig ausgenützte Bremsvermögen der Hinterradbremsen die Vorderachse mitgebremst. Das Fahrzeug erreicht daher die maximal mögliche Verzögerung. Die Flüssigkeitsreibungskupplung ist während des Bremsvorganges überbrückt und damit außer Funktion. Ein solch starrer Allradantrieb ist dann auch beim Rückwärtsfahren vorhanden, da der Freilauf dann ebenfalls sperrt.

Es ist zwar bereits bekannt, im Antriebsstrang zwischen Vorder- und Hinterachse eines Kraftfahrzeuges einen Freilauf vorzusehen (DE-A-3 317 247), jedoch ist dabei der Freilauf nicht parallel, sondern in Serie zur Flüssigkeitsreibungskupplung geschaltet und dient einer ganz anderen Aufgabe, wobei überdies die Vorderachse und nicht die Hinterachse den unmittelbaren Antrieb erfährt.

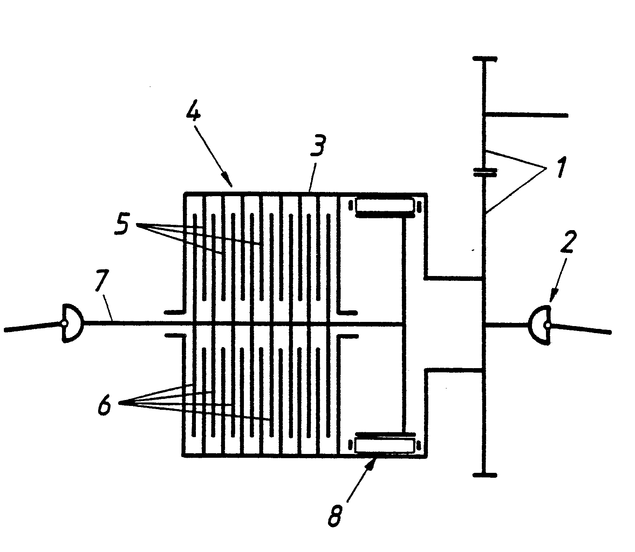

Die Zeichnung zeigt ein Ausführungsbeispiel einer erfindungsgemäßen Antriebsanordnung im Schema.

Vom nicht dargestellten Geschwindigkeitswechselgetriebe eines Kraftfahrzeuges wird über ein Stirnradpaar 1 einerseits die Gelenkwelle 2 zur Hinterachse und anderseits der eine Teil, nämlich das mit viskoser Flüssigkeit gefüllte Gehäuse 3 einer insgesamt mit 4 bezeichneten Flüssigkeitsreibungskupplung angetrieben. Mit dem Gehäuse 3 sind Lamellen 5 drehfest verbunden, die zwischen Innenlamellen 6 greifen, die in dehfester Verbindung mit der zur Vorderachse des Kraftfahrzeuges führenden Welle 7 stehen. Zwischen dem Gehäuse 3 und der Abtriebswelle 7 der Flüssigkeitsreibungskupplung 4 ist ein Klemmrollenfreilauf 8 angeordnet, der also parallel zur Flüssigkeitsreibungskupplung 4 angeordnet ist. Soferne die Drehzahl des zur Vorderachse führenden Antriebsstrangteiles 7 eine Drehzahl erreicht, die jene des zur Hinterachse führenden Antriebsstrangteiles 2 überschreitet, stellt der Freilauf 8 unter Überbrückung der Flüssigkeitsreibungskupplung 4 eine starre Verbindung zwischen den Wellen bzw. Antriebsstrangteilen 2 und 7 her.

## Patentanspruch

Antriebsanordnung für Kraftfahrzeuge, deren Hinterachse unmittelbar und deren Vorderachse mittelbar über eine Flüssigkeitsreibungskupplung (4) angetrieben sind, dadurch gekennzeichnet, daß im Antriebsstrang zur Vorderachse parallel zur Flüssigkeitsreibungskupplung (4) eine, z. B. von einem Klemmrollenfreilauf (8) gebildete, Einwegkupplung eingebaut ist, die bei die Drehzahl des zur Hinterachse führenden Antriebsstrangteiles (2) unterschreitender Drehzahl des zur Vorderachse führenden Antriebsstrangteiles gelöst ist.

## Claim

A drive system for motor vehicles in which the rear axle is directly driven and the front axle is indirectly driven by means of a liquid friction coupling (4), characterized in that a one-way coupling which is parallel to the liquid friction coupling (4) and consists, e. g., of a clamp-roller freewheel (8) is incorporated in the transmission line for driving the front axle and said one-way coupling is disengaged when the speed of the transmission line section leading to the front axle is lower than the speed of the transmission line section (2) leading to the rear axle.

## Revendication

Transmission pour véhicules à moteur dont l'essieu arrière est entraîné directement et l'essieu avant indirectement par l'intermédiaire d'un accouplement hydraulique à friction (4), caractérisée en ce qu'à la voie de transmission vers l'essieu avant est incorporé en parallèle à l'accouplement hydraulique à friction (4) un accouplement unidirectionnel constitué, par exemple, par un accouplement à roue libre à rouleaux de coincement (8) qui est désengagé lorsque la vitesse de rotation de la partie (2) de la transmission aboutissant à l'essieu avant devient inférieure à la vitesse de rotation de la partie de la transmission aboutissant à l'essieu arrière.